# EUROPÄISCHE PATENTSCHRIFT

(11) **EP 2 676 354 B1**
(45) Veröffentlichungstag und Bekanntmachung des Hinweises auf die Patenterteilung: **19.08.2015**
(21) Anmeldenummer: 12714551.4
(22) Anmeldetag: 27.01.2012
(51) Int. Cl.: H02K 1/14

(54) **STATOR EINES KLAUENPOLMOTORS**
STATOR OF A CLAW-POLE MOTOR
STATOR DE MOTEUR À GRIFFES

(30) Priorität: 15.02.2011 DE 102011004149
(43) Veröffentlichungstag der Anmeldung: 25.12.2013
(73) Patentinhaber: Bühler Motor GmbH, 90459 Nürnberg (DE)
(72) Erfinder: IHLE, Olai, 90542 Eckental (DE); WEISKE, Klaus, 90571 Schwaig (DE)
(86) Internationale Anmeldenummer: PCT/DE2012/200004
(87) Internationale Veröffentlichungsnummer: WO 2012/110033

(56) Entgegenhaltungen:
- EP-A1- 1 162 715
- EP-A2- 1 748 532
- DE-U1- 8 905 414
- GB-A- 906 942
- JP-A- S5 893 439
- US-A- 3 527 969

## Beschreibung

Die Erfindung betrifft ein Verfahren zur Herstellung eines Stators eines Klauenpolmotors, insbesondere zum Antrieb einer Kreiselpumpe, bestehend aus ringscheibenförmigen Statorblechen mit daran anschließenden Klauenpolen, welche permanentmagnetischen Polen eines Rotors gegenüberliegend angeordnet sind, einer ringförmigen Wicklung und einem Isolierstoffkörper, der zwischen den Statorblechen und der Wicklung, angeordnet ist und einem radial um die Wicklung und die Statorbleche herum angeordneten Rückschlussring, der fest an den Statorblechen anliegt.

Aus der DE 10 2006 021 242 ist ein Stator bekannt, bei dem ein durchmessergrößerer Rückschlussring auf den Stator aufgebracht wird und der Rückschlussring durch einen Umformvorgang im Durchmesser verringert und dadurch auf dem Stator befestigt ist. Die Festigkeit der Verbindung ist jedoch durch die unvermeidliche Rückfederung aufgrund der Elastizität des Rückschlussmaterials nicht optimal. Dies kann über die Lebensdauer und unter wechselnden Temperaturbedingungen zu Vibrationseffekten und ungewünschten Geräuschen führen.

Ein gattungsgemäßer Stator ist aus der DE 10 2008 054 037 A1 bekannt, wobei der Rückschlussring aus einem einzigen gebogenen Blechstreifen besteht. Der noch offene Rückschlussring wird über den Stator geschoben, über eine Vorrichtung zusammengedrückt und anschließend laserverschweißt. Die Enden bestehen aus einer Lasche und aus einer dazu passenden Ausnehmung, die ineinandergreifen. Der Zwischenraum zwischen den zu verschweißenden Bereichen ist eng toleriert, da dieser mit geschmolzenem Metall überbrückt werden muss. Da der Rückschlussring auf den bewickelten Stator aufgebracht wird, müssen die Schweißnähte sicherheitshalber außerhalb des Wicklungsbereichs verlaufen, um die Wicklung nicht durch den Schweißvorgang zu beschädigen. Dies verringert die Gestaltungsfreiheit der Verbindung. Der bekannte Rückschluss besteht aus einem einzigen gebogenen Blechstreifen, daher können Wirbelströme im Rückschluss den Wirkungsgrad verringern.

GB 906 942 und EP 1 748 532 beschreiben Rückschlussringe oder Gehäuse, die aus mehreren Konzentrischen Zylinderbögen bestehen. Aufgabe der vorliegenden Erfindung ist es daher bei der Herstellung einer gattungsgemäßen Kreiselpumpe für einen hohen Wirkungsgrad und für einen stabilen spielfreien Aufbau des Stators zu sorgen, so dass keine Vibrationen, Geräusche oder Resonanzen auftreten, wobei der Aufbau einfach und die Herstellung sicher und wirtschaftlich ist, zudem soll eine möglichst große Gestaltungsfreiheit gegeben sein.

Diese Aufgabe wird erfindungsgemäß durch die Merkmale des Anspruchs 1 gelöst. Weiterbildungen der Erfindung werden in den Unteransprüchen 2 bis 8 dargestellt. Die Verwendung von zumindest zwei ineinandergeschachtelten Blechringen statt eines einzigen Rückschlussblechs verringert die Wirbelstromentwicklung und erhöht damit den Wirkungsgrad des magnetischen Kreises. Weiter eröffnet sie neue gestalterische Möglichkeiten aufgrund des dünneren Blechmaterials. Auch der Werkzeugaufwand ist hierdurch geringer. Die beiden Freisparungen erlauben es den Rückschlussring im Durchmesser soweit zu verringern, dass eine optimal feste Verbindung zum Stator erreicht wird. Da die Freisparungen um einen Winkel versetzt zueinander angeordnet sind, ist der Rückschlussring vollumfänglich geschlossen, auch dies erhöht den Wirkungsgrad. Die erste Verbindungsstelle bewirkt, dass die beiden Blechringe sich nicht gegeneinander verschieben können, sie dient auch als Vormontageverbindung und ist notwendig, damit über die zweite Verbindungsstelle eine feste Anlage an den Stator erreicht werden kann. Hierzu wird der Rückschlussring durch Spannbacken an die Rückschlussbleche angedrückt. Die zweite Verbindungsstelle ist zwischen den beiden Freisparungen angeordnet. Die Freisparungen stellen jeweils eine Unterbrechung in Umfangsrichtung dar durch welche dem Rückschlussring eine Durchmesseranpassung ermöglicht wird. Unter den Schutzumfang würden auch Statoren mit Rückschlussringen fallen, bei denen die Freisparungen durch dünne biegbare Stege überbrückt sind, sofern die Verringerbarkeit des Rückschlussdurchmessers gewahrt bleibt.

Die Verbindung zwischen den Blechringen kann an der ersten Verbindungsstelle über Sicken oder durch Widerstandsschweißen erfolgen. Dabei wird vorgeschlagen dass die erste Verbindungsstelle (19) in der Nähe der zweiten Freisparung (18), welche durch Enden des zweiten und damit äußeren Blechrings (15) definiert wird, angeordnet ist. Dadurch wird vermieden, dass ein freies Ende am zweiten Blechring entsteht, das über einen großen Winkelbereich nicht mit dem ersten Blechring verbunden ist, wodurch die Vibrationsneigung verringert ist. Beim Sicken wird ein Stempel mit hohem Druck in die aufeinandergelegten Blechstreifen gedrückt, wodurch in einem Blech ein Vorsprung entsteht, der in eine Ausnehmung des anderen Blechs gepresst wird. Das Sicken und das Widerstandsschweißen sind ohne großen Aufwand herstellbar und verringern kaum die magnetischen Eigenschaften des Rückschlussrings. Auch andere vergleichbare Verbindungsverfahren können eingesetzt werden.

Ausklinkungen am äußeren zweiten Blechring bewirken, dass der Verbindungsbereich zwischen den beiden Blechringen nicht im Randbereich angeordnet ist. Der Randbereich dient als Verbindungsbereich zum Stator und soll daher keine Zusätzliche Funktion erhalten.

Die zweite Verbindungsstelle ist je nach Anforderung als Schweißverbindung, Biegeverbindung oder Schnappverbindung ausführbar.

Bei einer bevorzugten Ausführungsform sind ist der äußere zweite Blechring mit dem benachbarten inneren Blechring durch ein Laserschweißverfahren am Rande der Lasche verschweißt. Vorteil dieser Lösung ist, dass nach dem Schweißen keine Rückfederung des Rückschlusses mehr möglich ist, wodurch eine vibrationsfreie feste Verbindung zwischen dem Rückschlussring und dem Stator gegeben ist. Da die Freisparungen und damit die Enden der beiden Blechringe um einen Winkel versetzt zueinander angeordnet sind, besteht auch keine Gefahr der Beschädigung der Wicklung.

Um mögliche Vibrationen des zweiten Blechringes zu vermeiden, kann es sinnvoll sein eine zusätzliche Schweißnaht vorzusehen, durch welche die beiden Blechringe untereinander fixiert werden. Die zusätzliche Schweißnaht kann gemäß einer ersten Modifikation rechtwinklig zu Schweißnähten zwischen der Lasche des zweiten Blechrings und dem ersten Blechring angeordnet sein, wobei keine Geometrieänderung an den Blechringen erforderlich ist. Eine weitere Möglichkeit zur Vermeidung von Vibrationen besteht darin, die zusätzliche Schweißnaht in Verlängerung zu den Schweißnähten der zweiten Verbindungsstelle zwischen Seitenlaschen und der Lasche des zweiten Blechrings vorzusehen. Falls eine erste Verbindungsstelle zwischen den beiden Blechringen in der Nähe des zweiten Freiraums vorhanden ist, kann auf eine zweite Schweißnaht verzichtet werden. Das freie Ende des zweiten Blechrings muss auch dann nicht notwendigerweise durch eine Verbindung zwischen den beiden Blechringen in Nähe des zweiten Freiraums festgelegt werden, wenn sich eine stabile Fixierung nach Einbau des Stators in ein Motorgehäuse ergibt. Eine solche Fixierung kann z.B. durch Gehäuserippen an den entsprechenden Stellen hergestellt werden.

Ausführungsbeispiele der Erfindung werden nachfolgend anhand der Zeichnung näher erläutert. Es zeigen:
Fig. 1a eine erste Ausführungsform des Rückschlussrings,
Fig. 1b eine Draufsicht auf den geschweißten Rückschlussring gemäß Fig. 1a,
Fig. 1c eine Draufsicht auf eine Modifikation von Fig. 1b,
Fig. 1d eine Draufsicht auf eine weitere Modifikation von Fig. 1b oder eine zweite,
Fig. 1e eine Schweissvorrichtung,
Fig. 2a eine zweite Ausführungsform des Rückschlusrings,
Fig. 2b eine Teilschnittansicht gemäß Fig. 2a,
Fig. 3 eine dritte Ausführungsform des Rückschlussrings,
Fig. 4 einen Stator eines Klauenpolmotors ohne Rückschlussring und
Fig. 5 eine Schnittansicht durch eine Kreiselpumpe.

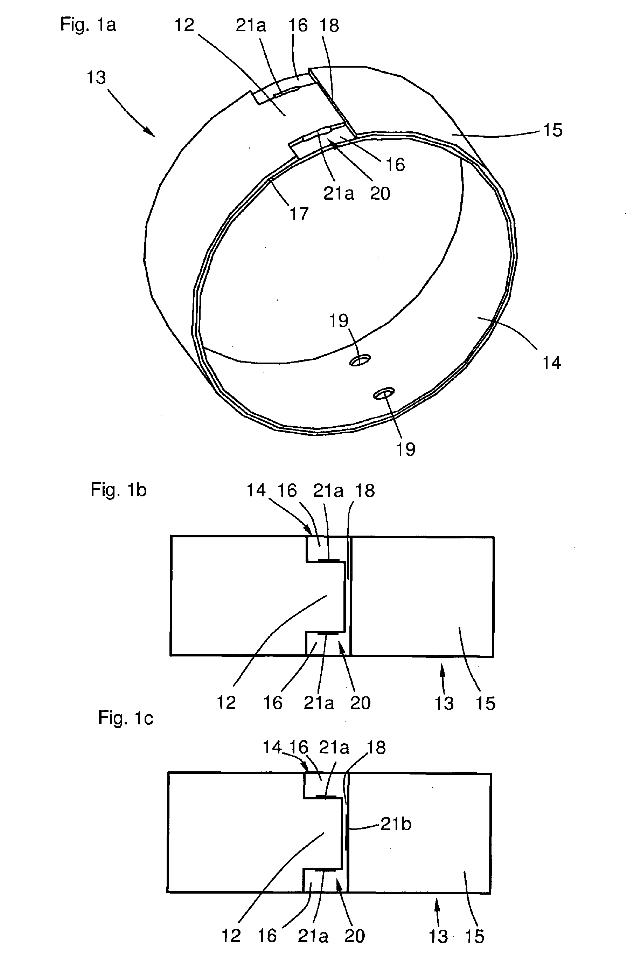

Fig. 1a zeigt eine erste Ausführungsform eines Rückschlussrings 13, mit einem ersten Blechring 14, einem zweiten Blechring 15, der koaxial am ersten Blechring 14 anschließt, einer ersten Freisparung 17, im ersten Blechring 14, einer zweiten Freisparung 18 im zweiten Blechring 15, Ausklinkungen 16 im Anschluss an die zweite Freisparung 18 des zweiten Blechrings 15 unter Belassung einer Lasche 12, eine erste Verbindungsstelle 19 und eine zweite Verbindungsstelle 20 zwischen den beiden Blechringen 14, 15, wobei die erste Verbindungsstelle 19 durch zwei Sicken gebildet ist und die zweite Verbindungsstelle 20 durch zwei Schweißnähte 21a. Bei den Schweißnähten handelt es sich um Laserschweißnähte. Die beiden Verbindungsstellen sind im gezeigten Beispiel um ca. 180° voneinander entfernt.

Fig. 1b zeigt eine vereinfachte Draufsicht auf den geschweißten Rückschlussring gemäß Fig. 1a, mit dem ersten Blechring 14, dem zweiten Blechring 15, der Lasche 12, den Ausklinkungen 16, der zweiten Freisparung 18, den Schweißnähten 21a. Die Freisparung 18 ist so dimensioniert, dass unter allen Toleranzzuständen eines Klauenpolstators und des Rückschlussrings 13 und der Toleranz der Anpresskraft bei der Montage stets eine sichere spielfreie Verbindung zwischen den zu verbindenden Bauteilen herstellbar ist. Um die Verschweißung mittels Laserstrahls zu erleichtern sind zwei Schweißnähte 21 a vorgesehen, die einen genügend großen Abstand voneinander haben, um einem Spannbacken und dem Laserstrahl ausreichend Raum zu bieten. Die Schweißnähte 21 a verbinden die aneinanderliegenden Blechringe zumindest teilweise miteinander, sie sind im Betrieb auf Scherung belastet und stellen daher eine sehr robuste und unnachgiebige Verbindung dar.

Fig. 1c zeigt eine Draufsicht auf eine Modifikation von Fig. 1b, dabei ist eine zusätzliche Schweißnaht 21b zwischen dem ersten Blechring 14 und dem zweiten Blechring 15 im Bereich der zweiten Freisparung 18 dargestellt. Diese Schweißnaht 21 b dient vornehmlich der Verhinderung von Vibrationen, sie kann auch aus zwei kurzen Schweißnähten in den Randbereichen des Rückschlussrings 13 bestehen.

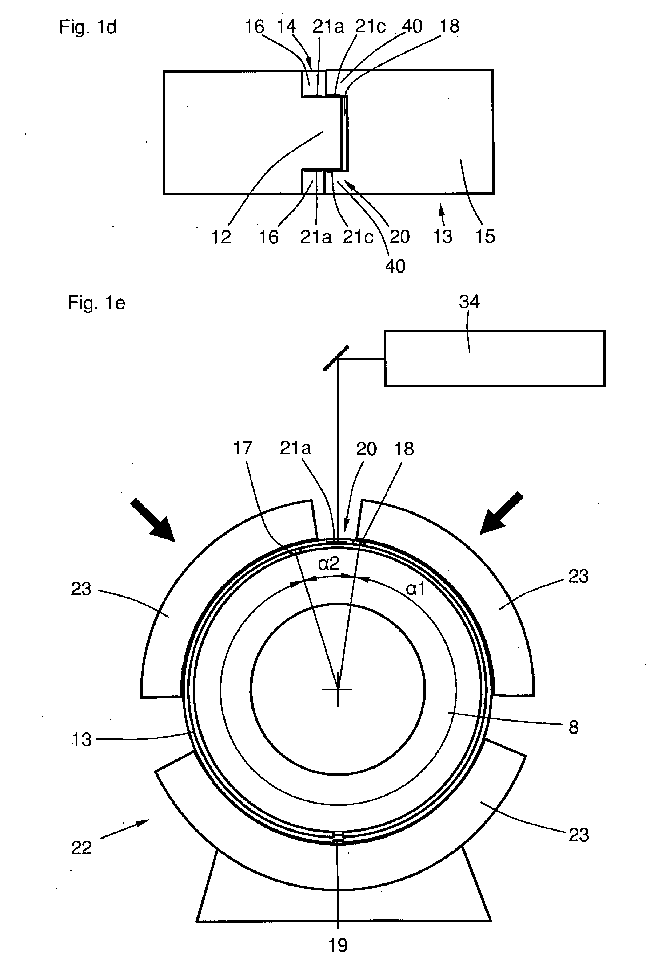

Eine zweite Modifikation von Fig. 1b stellt Fig. 1d dar. Am zweiten Blechring 15 sind nahe der zweiten Verbindungsstelle 20 zusätzlich seitliche Laschen 40 beiderseits der Lasche 12 vorgesehen, die nur einen Teil der Ausklinkungen 16 ausfüllen, so dass sowohl die Schweißnaht 21a zwischen den beiden Blechringen 14 und 15 als auch auf beiden Seiten eine Schweißnaht 21 c zwischen den beiden Enden des zweiten Blechrings 15 als Verlängerung der Schweißnähte 21 a herstellbar ist. Fig. 1b stellt auch eine Variante der zweiten Lösung der Erfindung dar, wobei keine erste Verbindungsstelle zwischen den beiden Blechringen vorhanden ist.

Fig. 1e zeigt eine Schweißvorrichtung 22 mit zwei beweglichen Spannbacken 23, die für eine spielfreie Anlage des Rückschlussrings 13 am Klauenpolstator 8 sorgen. Ein Laser 34 erzeugt einen energiereichen gepulsten Laserstrahl definierter Leistung und Dauer. Während des Schweißvorgangs pressen die Spannbacken 23 den Rückschlussring 13 an den Klauenpolstator 8. Vor dem Einlegen der Statorteile in die Schweißvorrichtung 23 müssen diese gefügt werden. Hierzu ist der Rückschlussring 13 nach dem Rollen etwas aufgeweitet, so dass er sich mühelos auf den Klauenpolstator aufschieben lässt. Die Schweißvorrichtung ist so dimensioniert, dass der Laserstrahl ungehindert die Schweißstelle erreichen und Schweißnähte 21 a ausreichender Länge erzeugen kann. Die gezeigte Schweißvorrichtung ist nur als Prinzipskizze dargestellt. Es sind eine Vielzahl anderer Ausführungen möglich, dies bezieht sich auch auf die Anzahl der Spannbacken und ihre Form.

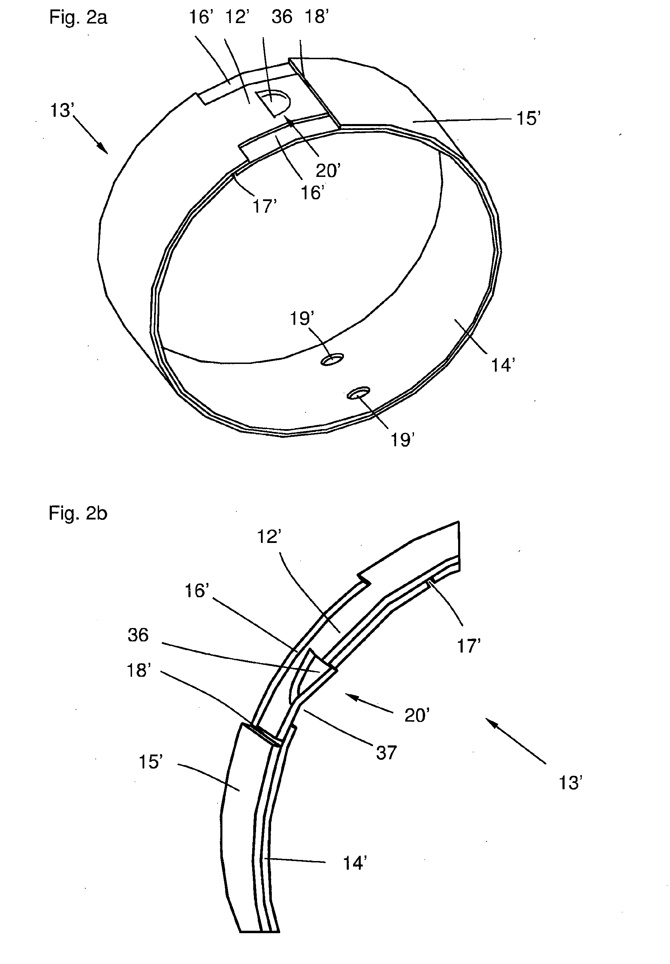

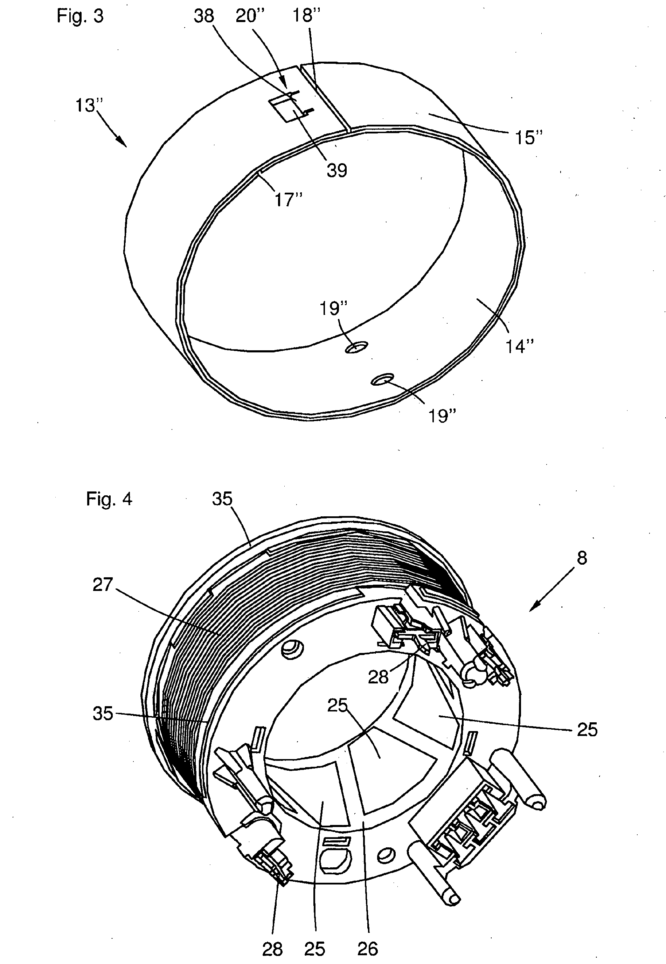

Fig. 2a und Fig. 2b zeigen eine zweite Ausführungsform des Rückschlussrings 13, mit Blechringen 14', 15', den Freisparungen 17', 18', der ersten Verbindungsstelle 19' (Fig. 3a) und der zweiten Verbindungsstelle 20', die sich von der ersten Ausführungsform dadurch unterscheidet, dass die Verbindung eine Rastverbindung mit einer Rastnase 36 und einer Rastausnehmung 37 (Fig. 3b) ist. Die Montage des Rückschlussrings 13 auf den Klauenpolstator erfolgt in einer Vorrichtung in der der über den Stator geschobene Rückschlussring zusammengedrückt wird und die Rastverbindung hergestellt wird.

Eine dritte Ausführungsform des Rückschlussrings 13" ist in Fig. 3 dargestellt, mit Blechringen 14", 15", Freisparungen 17", 18" und Verbindungsstellen 19" und 20" zwischen den Blechringen. Die Verbindungsstelle 20" ist hier als Biegelasche 38 ausgebildet, die in eine Befestigungsausnehmung 39 gebogen ist.

Fig.4 zeigt den Stator 8 eines Klauenpolmotors, mit einem Isolierstoffkörper 26 in welchem Klauenpole 25 eingebettet sind. Die Klauenpole sind einstückig mit ringscheibenförmigen Statorringen 35 ausgebildet. Der Isolierstoffkörper 26 ist mit Befestigungsmitteln einstückig und mit Anschlüssen 28 bestückt. Der den Magnetkreis schließende Rückschlussring ist hier nicht dargestellt.

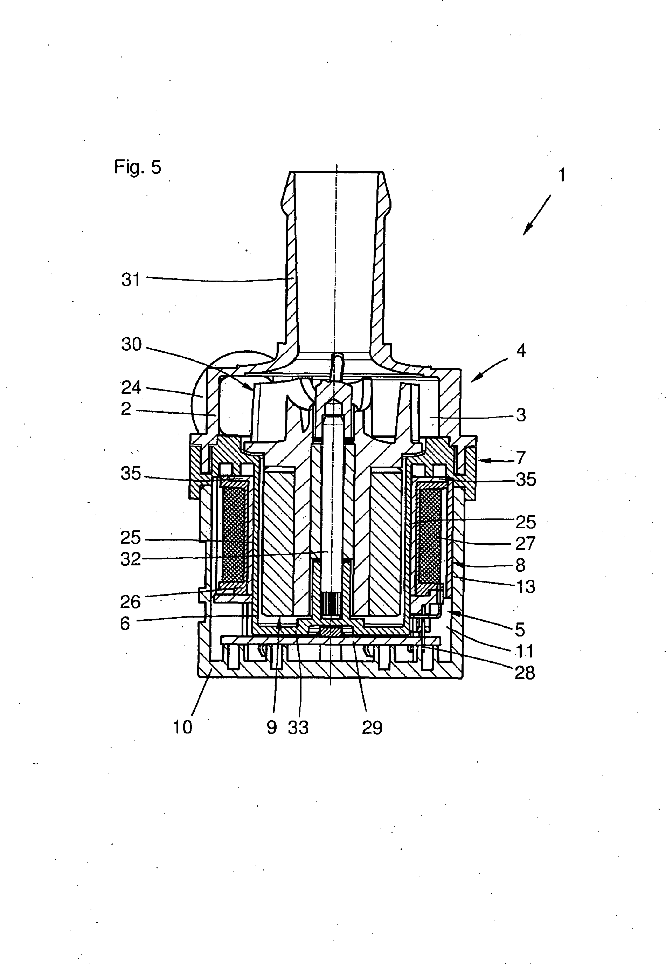

Ein Anwendungsbeispiel des Stators ist in Fig. 5 dargestellt, sie zeigt eine Schnittansicht einer Kreiselpumpe 1 mit einem Pumpengehäuse 2, das einen Pumpenraum 3 begrenzt, einem Zwischengehäuseteil 7, mit einem Spalttopf 6, dem Klauenpolstator 8, dem Rückschlussring 13 und einem Motorgehäuseteil 10, das einen Motorraum 11 begrenzt. Der Klauenpolstator weist die Klauenpole 25, den Isolierstoffkörper 26, die Wicklung 27 und die Anschlüsse 28 auf. Die Anschlüsse 28 in Form von Kontaktstiften stellen eine elektrische Verbindung mit einer Leiterplatte 29 her. Der Isolierstoffkörper 26 kann durch Umspritzen der Klauenpole 25 hergestellt werden. Innerhalb des Spalttopfs 6 befindet sich ein drehbar gelagerter permanentmagnetischer Rotor 9, dessen Nabe einstückig mit einem Pumpenlaufrad 30 ist. Das Pumpengehäuse 2 ist einstückig mit einem Saugstutzen 31 und dem Druckstutzen 24. Der Rotor ist auf einer in einem Boden 33 des Spalttopfes befestigten Achse 32 gelagert.

**Bezugszeichenliste**

| | | | |
|---|---|---|---|
| 1 | Kreiselpumpe | 32 | Achse |
| 2 | Pumpengehäuse | 33 | Boden |
| 3 | Pumpenraum | 34 | Laser |
| 4 | Gehäuseteil | 35 | ringscheibenförmiger Statorring |
| 5 | Elektromotor | 36 | Rastnase |
| 6 | Spalttopf | 37 | Rastausnehmung |
| 7 | Zwischengehäuseteil | 38 | Biegelasche |
| 8 | Klauenpolstator | 39 | Befestigungsausnehmung |
| 9 | Rotor | 40 | seitliche Laschen |
| 10 | Motorgehäuseteil | | |
| 11 | Motorraum | | |
| 12, 12' | Lasche | | |
| 13, 13', 13" | Rückschlussring | | |
| 14, 14', 14" | erster Blechring | | |
| 15, 15', 15" | zweiter Blechring | | |
| 16, 16' | Ausklinkung | | |
| 17, 17', 17" | erste Freisparung | | |
| 18, 18', 18" | zweite Freisparung | | |
| 19, 19', 19" | erste Verbindungsstelle | | |
| 20, 20', 20" | zweite Verbindungsstelle | | |
| 21a, 21b, 21c | Schweißnaht | | |
| 22 | Schweißvorrichtung | | |
| 23 | Spannbacken | | |
| 24 | Druckstutzen | | |
| 25 | Klauenpol | | |
| 26 | Isolierstoffkörper | | |
| 27 | Wicklung | | |
| 28 | Anschlüsse | | |
| 29 | Leiterplatte | | |
| 30 | Pumpenlaufrad | | |
| 31 | Saugstutzen | | |

## Patentansprüche

1. Verfahren zur Herstellung eines Stators (8) eines Klauenpolmotors, insbesondere zum Antrieb einer Kreiselpumpe (1), bestehend aus ringscheibenförmigen Statorblechen (35) mit daran anschließenden Klauenpolen (25), welche permanentmagnetischen Polen eines Rotors (9) gegenüberliegend angeordnet sind, einer ringförmigen Wicklung (27) und einem Isolierstoffkörper (26), der zwischen den Statorblechen (35) und der Wicklung (27), angeordnet ist und einem radial um die Wicklung (27) und die Statorbleche (35) herum angeordneten Rückschlussring (13), der fest an den Statorblechen (35) anliegt, **gekennzeichnet durch** die folgenden Verfahrensschritte: a) der Rückschlussring (13) wird aus zumindest zwei koaxial ineinandergeschachtelten Blechringen (14, 15) gefügt, die jeweils zumindest eine Freisparung (17, 18) aufweisen die so dimensioniert sind, dass unter allen Toleranzzuständen des Klauenpolstators und des Rückschlussrings (13) und der Toleranz der Anpresskraft bei der Montage stets eine sichere spielfreie Verbindung zwischen den zu verbindenden Bauteilen herstellbar ist, b) die Freisparungen (17, 18) werden zueinander um einen Winkel versetzt angeordnet, so dass sie sich nicht überlappen, wobei die beiden Freisparungen (17, 18) zwei Winkelbereiche α1, α2 definieren, c) die Blechringe (14, 15) werden an einer ersten Verbindungsstelle (19) im Winkelbereich α1 fest miteinander verbunden d) der Rückschlussring (13) wird auf die bewickelten Statorbleche (35) gefügt und spielfrei daran angedrückt und e) der zweite Blechring (15) wird mit dem ersten Blechring (14) mit Hilfe von Laschen (12, 40) des zweiten Blechrings (15) an einer zweiten Verbindungsstelle (20) im Winkelbereich α2 fest miteinander verbunden.

2. Verfahren nach Anspruch 1, **dadurch gekennzeichnet, dass** die Verbindung zwischen den Blechringen (14, 15) an der ersten Verbindungsstelle (19) über Sicken, Widerstandsschweißung oder eine andere vergleichbare Verbindungsart erfolgt und die zweite Verbindungsstelle (20) in der Nähe der zweiten Freisparung (18), welche durch Enden des zweiten und damit äußeren Blechrings (15) definiert wird, angeordnet werden.

3. Verfahren nach Anspruch 1 oder 2, **dadurch gekennzeichnet, dass** der äußere Blechring (15) in einem an die Freisparung (18) anschließenden Bereich mit Ausklinkungen (16) versehen wird, so dass eine gegenüber der Breite des innen anschließenden Rings schmalere Lasche (12) verbleibt.

4. Verfahren nach Anspruch 1, 2 oder 3, **dadurch gekennzeichnet, dass** die Blechringe (14, 15) an der zweiten Verbindungsstelle (20) im Winkelbereich α2 miteinander verschweißt, durch Biegen oder durch Schnappen verbunden werden.

5. Verfahren nach Anspruch **4, dadurch gekennzeichnet, dass** der äußere Blechring (15) mit dem benachbarten inneren Blechring (14) durch ein Laserschweißverfahren am Rande der Lasche (12) verschweißt wird.

6. Verfahren nach Anspruch 5, **dadurch gekennzeichnet, dass** die beiden Blechringe (14, 15) durch eine zusätzliche Schweißnaht (21b) zueinander fixiert werden.

7. Verfahren nach Anspruch 6, **dadurch gekennzeichnet, dass** die zusätzliche Schweißnaht (21 b) rechtwinklig zu Schweißnähten (21 a) zwischen der Lasche (12) des zweiten Blechrings (15) und dem ersten Blechring (14) ausgeführt wird.

8. Verfahren nach Anspruch 6, **dadurch gekennzeichnet, dass** eine zusätzliche Schweißnaht (21c) in Verlängerung zu den Schweißnähten (21a) zwischen Seitenlaschen (40) und der Lasche (12) des zweiten Blechrings (15) hergestellt wird.

## Claims

1. A method of manufacturing a stator (8) of a claw pole motor, in particular to drive a centrifugal pump (1), consisting of annular-disc-shaped stator laminations (35) with adjoining claw poles (25), which are arranged opposite permanent-magnetic poles of a rotor (9), a ring-shaped winding (27) and an insulating-material body (26), which is arranged between the stator laminations (35) and the winding (27), and a short-circuit ring (13), arranged radially around the winding (27) and the stator laminations (35), which lies securely against the stator laminations (35), **characterized by** the following method steps: a) the short-circuit ring (13) is assembled from at least two sheet-metal rings (14, 15), coaxially nested into each other, each having at least one cut out (17, 18) which are dimensioned in such a manner that under all tolerance states of the claw pole stator and of the short-circuit ring (13) and under the tolerance of the contact pressure upon assembly there can always be produced a secure, play-free connection between the components to be connected, b) the cut outs (17, 18) are arranged offset at an angle to one another so that they do not overlap, wherein the two cut outs (17, 18) define two angular ranges α1, α2, c) the sheet-metal rings (14, 15) are securely connected to one another at a first connecting site (19) in the angular range α1, d) the short-circuit ring (13) is attached onto the stator laminations (35) with windings wound therearound and is pressed thereon in a play-free manner and e) the second sheet-metal ring (15) is securely connected to the first sheet-metal ring (14) at a second connecting site (20) in the angular range α2 with the aid of tabs (12, 40) of the second sheet-metal ring (15).

2. A method according to claim 1, **characterized in that** the connection between the sheet-metal rings (14, 15) at the first connecting site (19) takes place via beads, resistance welding or another comparable connection type and the second connecting site (20) is arranged in the vicinity of the second cut out (18) defined by ends of the second and thereby outer sheet-metal ring (15).

3. A method according to claim 1 or 2, **characterized in that** the outer sheet-metal ring (15) is provided with notches (16) in a region adjoining the cut out (18), so that a tab (12) remains which is narrower than the width of the inwardly adjoining ring.

4. A method according to claim 1, 2 or 3, **characterized in that** at the second connecting site (20) in the angular range α2, the sheet-metal rings (14, 15) are welded to one another, connected to one another through bending or by snapping together.

5. A method according to claim 4, **characterized in that** the outer sheet-metal ring (15) is welded to the adjacent, inner sheet-metal ring (14) by a laser welding procedure at the edge of the tab (12).

6. A method according to claim 5, **characterized in that** the two sheet-metal rings (14, 15) are fixed to one another by an additional weld seam (21b).

7. A method according to claim 6, **characterized in that** the additional weld seam (21b) is made at right angles to weld seams (21a), between the tab (12) of the second sheet-metal ring (15) and the first sheet-metal ring (14).

8. A method according to claim 6, **characterized in that** an additional weld seam (21c) is produced, as an extension to the weld seams (21a), between lateral tabs (40) and the tab (12) of the second sheet-metal ring (15).

## Revendications

1. Procédé de fabrication d'un stator (8) d'un moteur à pôles à griffes, notamment destiné à l'entraînement d'une pompe centrifuge (1), et constitué de tôles de stator (35) en forme de disques annulaires, auxquelles se raccordent des pôles à griffes (25) agencés en regard de pôles magnétiques permanents d'un rotor (9), d'un enroulement (27) de forme annulaire et d'un corps en matériau isolant (26), qui est agencé entre les tôles de stator (35) et l'enroulement (27), et d'un anneau de retour de flux (13), qui est agencé radialement autour de l'enroulement (27) et des tôles de stator (35), et s'appuie de manière fixe contre les tôles de stator (35), **caractérisé par** les étapes de procédé suivantes :
a) l'anneau de retour de flux (13) est constitué par l'assemblage d'au moins deux anneaux de tôle (14, 15) emboités coaxialement l'un dans l'autre et présentant chacun respectivement au moins un joint de dégagement (17, 18), ces joints de dégagement étant dimensionnés de manière telle que, sous toutes les conditions de tolérance du stator à pôles à griffes et de l'anneau de retour de flux (13), et de tolérance de la force de compression lors du montage, il soit possible d'établir une liaison fiable, sans jeu, entre les pièces à relier,
b) les joints de dégagement (17, 18) sont agencés de manière à être décalés mutuellement d'un certain angle de manière à ne pas se chevaucher réciproquement, les deux joints de dégagement (17, 18) définissant deux secteurs angulaires α1, α2,
c) les anneaux de tôle (14, 15) sont reliés mutuellement de manière fixe au niveau d'une première zone d'assemblage (19) dans le secteur angulaire α1,
d) l'anneau de retour de flux (13) est engagé sur les tôles de stator (35) bobinées avec l'enroulement, et y est pressé sans jeu, et
e) le deuxième anneau de tôle (15) est relié de manière fixe au premier anneau de tôle (14) à l'aide de languettes (12, 40) du deuxième anneau de tôle (15), au niveau d'une deuxième zone de liaison (20) dans le secteur angulaire α2.

2. Procédé selon la revendication 1, **caractérisé en ce que** la liaison entre les anneaux de tôles (14, 15) s'effectue, au niveau de la première zone de liaison (19), par l'intermédiaire d'un sertissage, d'un soudage par résistance ou d'un autre type comparable de liaison d'assemblage, et la deuxième zone de liaison (20) est agencée à proximité du deuxième joint de dégagement (18), qui est défini par des extrémités du deuxième anneau de tôle (15), à savoir l'anneau de tôle extérieur.

3. Procédé selon la revendication 1 ou la revendication 2, **caractérisé en ce que** l'anneau de tôle extérieur (15) est muni, dans une zone se raccordant au joint de dégagement (18), d'encoches (16), de manière à ce qu'il ne reste qu'une languette (12) plus étroite que la largeur de l'anneau succédant à l'intérieur.

4. Procédé selon la revendication 1, 2 ou la revendication 3, **caractérisé en ce qu'**au niveau de la deuxième zone de liaison (20) dans le secteur angulaire α2, les anneaux de tôle (14, 15) sont soudés l'un à l'autre ou sont reliés par pliage ou enclenchement.

5. Procédé selon la revendication 4, **caractérisé en ce que** l'anneau de tôle extérieur (15) est soudé à l'anneau de tôle intérieur voisin (14), par un procédé de soudage au laser, au niveau du bord de la languette (12).

6. Procédé selon la revendication 5, **caractérisé en ce que** les deux anneaux de tôle (14, 15) sont fixés l'un à l'autre par un joint de soudage supplémentaire (21b).

7. Procédé selon la revendication 6, **caractérisé en ce que** le joint de soudage supplémentaire (21b) est réalisé perpendiculairement à des joints de soudage (21a) entre la languette (12) du deuxième anneau de tôle (15) et le premier anneau de tôle (14).

8. Procédé selon la revendication 6, **caractérisé en ce que** qu'un joint de soudage supplémentaire (21c) est réalisé en prolongement des joints de soudage (21a), entre des languettes latérales (40) et la languette (12) du deuxième anneau de tôle (15).
